**Europäisches Patentamt**

**European Patent Office**

**Office européen des brevets**

(19)

(11) Veröffentlichungsnummer: **0 383 974**

**A1**

# EUROPÄISCHE PATENTANMELDUNG

(21) Anmeldenummer: **89103128.8**

(22) Anmeldetag: **23.02.89**

(51) Int. Cl.5: **G01L 9/00, G01L 9/04, G01L 9/06, G01L 1/22, G01L 1/18, G01P 15/12**

(43) Veröffentlichungstag der Anmeldung:
**29.08.90 Patentblatt 90/35**

(84) Benannte Vertragsstaaten:
**AT CH DE GB LI**

(71) Anmelder: **Kristal Instrumente AG**
**Eulachstrasse 22**
**CH-8408 Winterthur(CH)**

(72) Erfinder: **Sonderegger, Hans Conrad**
**Sonnhaldenstrasse 7**
**CH-8413 Neftenbach(CH)**
Erfinder: **Calderara, Reto**
**Sonnhaldenstrasse 9**
**CH-8413 Neftenbach(CH)**
Erfinder: **Mändli, Andreas**
**Stadlerstrasse 160**
**CH-8404 Winterthur(CH)**

(74) Vertreter: **Schmidt, Horst, Dr.**
**Siegfriedstrasse 8**
**D-8000 München 40(DE)**

(54) **Plattenförmiges Sensorelement sowie damit versehener Druck-, Kraft- oder Beschleunigungsaufnehmer.**

(57) Ein plattenförmiges Sensorelement, insbesondere für den Einbau in Druck-, Kraft- oder Beschleunigungsaufnehmer, hat eine im wesentlichen rechteckförmige Konfiguration mit einem Paar gegenüberliegenden Halterungsbereichen (8) und einem zentralen biegebalkenartigen Bereich (1), der zwischen den freien Stirnenden des Sensorelementes ausgebildet und über torsionselastische Stege (10) mit den Halterungsbereichen (8) verbunden ist. Beidseitig des biegebalkenartigen Bereiches (1) sind die torsionselastischen Stege (10) schaffende Schlitze (7) vorgesehen. Das Sensorelement ist nur längs der Halterungsbereiche (8) in einem Aufnehmergrundkörper (5) eingespannt. Dadurch können sich thermisch oder mechanisch bedingte Verspannungen des Aufnehmergrundkörpers (5) nicht auf den biegebalkenartigen Bereich (1) des Sensorelementes auswirken. Der biegebalkenartige Bereich (1) erfährt bei zentraler Beanspruchung eine im wesentlichen gleichförmige Durchbiegung, so dass er im wesentlichen längs seiner gesamten Länge messtechnisch wirksam mit Dehnungsmesselementen (2) belegt werden kann, ein- oder vorzugsweise beidseitig. Die plattenförmige Gestalt des Sensorelementes gestattet es, dieses bezüglich des Kraftübertragungselementes (4) und Überlastschutzanschlages genau zu positionieren und auf einfache Art zu halten. Auf der Sensorplatte direkt aufgebrachte Leiterpfade, Kompensationswiderstände und Anschlussaugen ermöglichen auch bei höheren Temperaturen eine betriebssichere Signalableitung.

Fig. 2

### Plattenförmiges Sensorelement sowie damit versehener Druck-, Kraft- oder Beschleunigungsaufnehmer

Die Erfindung betrifft ein plattenförmiges Sensorelement, welches ein für die Durchbiegung unter dem Einfluss einer Biegekraft massgebliches elektrisches Signal liefert, sowie einen mit einem derartigen Sensorelement versehenen Druck-, Kraft- oder Beschleunigungsaufnehmer.

Sensorelemente nach Art eines Biegebalkens mit Dehnungsmessstreifen sind bekannt. So sind in der GB-A-953 138 und US-A-40 64 744 Biegebalkenanordnungen dargestellt, bei denen beidseitig eines endseitig eingespannten Balkens je ein Dehnungsmessstreifen angebracht ist. Die Krafteinleitung erfolgt beidseitig zwischen Balkenmitte und Balkenende. Bei Druckkräften biegt sich der Balken nach unten durch. Dabei wird der untere Dehnungsmessstreifen gedehnt, der obere gestaucht, was eine Erhöhung der Messempfindlichkeit und eine gewisse Temperaturkompensation ermöglicht. Anstelle von zwei Dehnungsmessstreifen werden häufig auch mehrere, beispielsweise vier Dehnungsmessstreifen vorgesehen, wodurch sich eine weitere Erhöhung der Messempfindlichkeit erzielen lässt, insbesondere wenn die Dehnungsmessstreifen an den Stellen der stärksten Krümmung vorgesehen sind. Eine solche Anordnung ist z.B. in der US-A-32 41 373 beschrieben. Bei Druckmessung erfolgt die Krafteinleitung häufig über eine Membran. Die Druckübertragung auf den Biegebalken kann mittels eines Krafteinleitungselementes oder eines Nockens erfolgen, wie dies beispielsweise in der DE-A-12 52 439 beschrieben ist. Sensorelemente sind ferner bekannt, bei denen der Balken direkt mit der Membran verbunden ist (EP-A- 134 394). Der Biegebalken ist eine Kreisscheibe, die längs ihres Umfanges in einem Aufnehmergrundkörper eingespannt ist. Ein derartiges Einspannen des Biegebalkens ist nachteilig, da die Biegungszonen, die messtechnisch wirksam mit Dehnungsmessstreifen besetzt werden können, sich nicht über die gesamte diametrale Länge des Biegebalkens erstrecken können. Es kann somit nicht der gesamte Bereich des Biegebalkens messtechnisch ausgenutzt werden. Ferner können sich beispielsweise thermisch oder mechanisch bedingte innere Verspannungen auf den Biegebalken auswirken, wodurch die Messung verfälscht werden kann. Auch andere mechanische Spannungen, wie sie beispielsweise bei Einsetzen des Sensorelementes in eine Bohrung zur Messung der Beanspruchungen im umgebenden Material entstehen, können sich verfälschend auf die Messung auswirken. Die bei der Herstellung von Sensorelementen bisher verwendeten Materialien, bei denen es sich im allgemeinen um Metalle handelte, lassen keine hohen Temperaturen zu.

Der Erfindung liegt demgegenüber die Aufgabe zugrunde, ein plattenförmiges Sensorelement der eingangs erwähnten Gattung zu schaffen, welches die oben genannten Nachteile bekannter Sensorelemente im wesentlichen vermeidet und zum Einsatz bei höheren Temperaturen geeignet ist.

Diese Aufgabe wird erfindungsgemäss dadurch gelöst, dass das Sensorelement eine im wesentlichen rechteckähnliche Konfiguration mit einem Paar gegenüberliegenden Halterungsbereichen zur Befestigung in einem Aufnehmer hat, und dass ein zentraler biegebalkenartiger Bereich zwischen den freien Stirnenden ausgebildet und torsionselastisch mit den Halterungsbereichen verbunden ist. Ein derartiges Sensorelement kann beispielsweise dadurch geschaffen werden, dass von einer flachen Kreisscheibe zwei symmetrische Kreissegmentflächen an gegenüberliegenden Stellen abgetrennt werden, wodurch ein im wesentlichen rechteckähnliches Element entsteht, bei dem ein Paar gegenüberliegende Stirnkanten kreissegmentförmig verlaufen. Der verbleibende zentrale Bereich hat ein Paar gegenüberliegende freie Stirnenden oder - kanten, zwischen denen eine Biegebalkenpartie definiert ist, die sich längs einer Achse erstreckt, die vorzugsweise senkrecht zu der Achse liegt, die durch die kreissegmentförmigen Kanten geht. Beidseitig der Biegebalkenpartie können Schlitze mit abgerundeten Enden vorgesehen sein, die torsionselastische Verbindungen mit den die kreissegmentförmigen Stirnkanten aufweisenden Halterungsbereichen schaffen. Der zentrale rechteckähnliche Bereich, welcher die Biegebalkenpartie enthält, weist daher ein Paar gegenüberliegende freie Stirnkanten auf, längs denen das Sensorelement nicht mit dem Aufnehmergrundkörper verbunden bzw. verspannt ist. Dadurch kann sich der biegebalkenartige Bereich unter Belastung kontinuierlich krümmen, so dass die gesamte Länge des biegebalkenartigen Bereiches mit Dehnungsmesselementen bestückt werden kann. Ausserdem wird eine bessere thermische Stabilität des Sensorelementes erzielt, da sich thermisch bedingte mechanische Spannungen nicht oder nur in sehr geringem Umfang bis zur Biegebalkenpartie auswirken und die Messungen verfälschen können. Entsprechendes gilt für andere, z.B. aus der Befestigung des Aufnehmers an einer Messstelle induzierten mechanischen Störspannungen. Zudem wirken diese Störspannungen senkrecht zu der Längsachse des biegebalkenartigen Bereiches und auch senkrecht zu der eingeleiteten Kraft, wodurch deren die Messung verfälschende Wirkung weiter herabgemindert wird.

Bezüglich Weiterbildungen der Erfindung wird auf die Unteransprüche 2 bis 10 und 15 bis 17 verwiesen.

Ein Druck-, Kraft- oder Beschleunigungsaufnehmer nach der Erfindung zeichnet sich aus durch ein darin befestigtes Sensorelement der vorerwähnten Art, wobei ein Krafteinleitungselement vorgesehen ist, welches auf eine zentrale Stelle des biegebalkenartigen Bereiches zur Schaffung einer im wesentlichen durchgehenden gleichmässigen Krümmung wirkt. Weiterbildungen des Aufnehmers sind in den Unteransprüchen 12 bis 14 aufgeführt.

Ein Druck-, Kraft- oder Beschleunigungsaufnehmer gemäss einem anderen Aspekt der Erfindung zeichnet sich dadurch aus, dass er ein Sensorelement der vorerwähnten Art enthält, dass das Sensorelement zwischen einer Abdeckplatte und dem Aufnehmerkörper eingeklemmt ist, und dass die Abdeckplatte ein Überlastschutzelement trägt und mit dem Aufnehmergehäuse vakuumverschweisst ist. Gemäss einem anderen Aspekt der Erfindung ist ein Druck-, Kraft- oder Beschleunigungsaufnehmer vorgesehen, der ein Sensorelement der vorerwähnten Art enthält, wobei der biegebalkenartige Bereich durch eine geradlinige Auflagekante des Kraftübertragungselementes gebogen wird. Schliesslich zeichnet sich ein erfindungsgemässer Kraftaufnehmer durch ein Sensorelement der vorerwähnten Art aus, dessen biegebalkenartiger Bereich im unbelasteten Zustand bereits eine Verbiegung zur Messung von Zug- und Druckkräften aufweist.

Die Erfindung wird nachfolgend anhand der Zeichnung und bevorzugter Ausführungsformen näher erläutert. Es zeigen:

Fig. 1 in geschnittener Ansicht ein bekanntes Sensorelement, eingebaut in einem Druckaufnehmer,

Fig. 2 in geschnittener Ansicht ein Sensorelement gemäss einer Ausführungsform der Erfindung, eingebaut in einem Druckaufnehmer,

Fig. 3 einen Schnitt längs der Schnittlinie G-G in Fig. 2,

Fig. 4 in geschnittener Ansicht einen Druckaufnehmer mit eingebautem Sensorelement nach der Erfindung gemäss einer anderen Ausführungsform der Erfindung,

Fig. 5 in geschnittener Ansicht einen Kraftaufnehmer mit eingebautem Sensorelement gemäss einer weiteren Ausführungsform der Erfindung,

Fig. 6 in Detailansicht ein Sensorelement gemäss einer anderen Ausführungsform der Erfindung mit aufgeglasten Siliziumstäbchen als Dehnungsmesselemente,

Fig. 7 den biegebalkenartigen Bereich des Sensorelementes nach Fig. 6 in quergeschnittener Ansicht,

Fig. 8 einen Schnitt längs der Schnittlinie B-B der Fig. 9 mit Darstellung eines erfindungsgemässen Sensorelementes, eingebaut in einem Druckaufnehmer mit Signalableitstiften,

Fig. 9 einen Schnitt längs der Schnittlinie A-A der Fig. 8 mit Darstellung eines erfindungsgemässen Sensorelementes mit direkt auf der Sensorplatte aufgebrachten Signalableitpfaden und Kontaktanschlüssen; der biegebalkenartige Bereich ist durch pfeilförmige Linien begrenzt, und

Fig. 10 in Draufsicht ein erfindungsgemässes Sensorelement mit kreissegmentförmiger statt mit kreisabschnittförmiger Begrenzung.

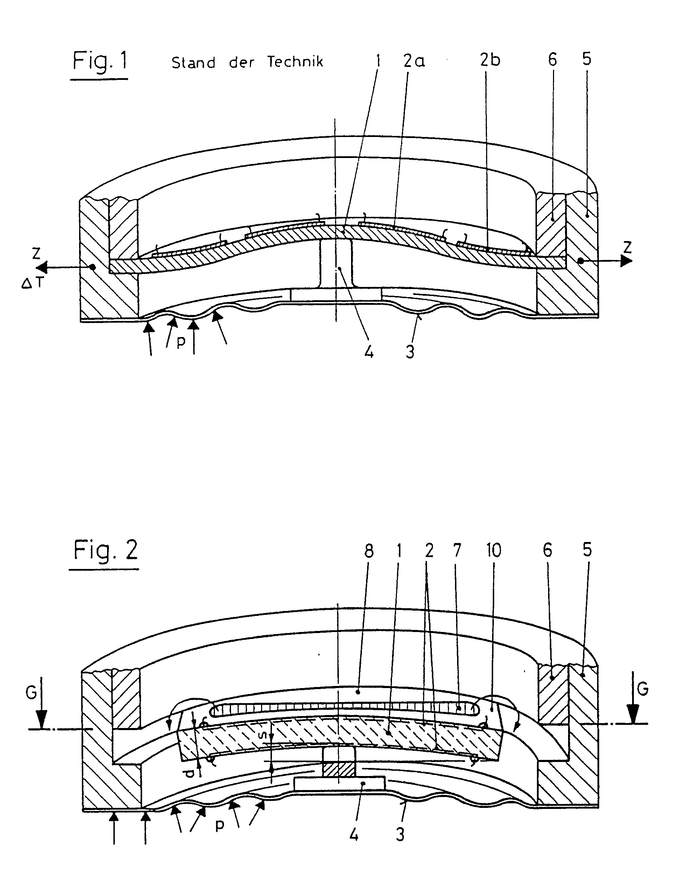

Fig. 1 stellt den Stand der Technik der bisher angewandten Biegebalken-Sensoren dar, eingebaut in einen Druckaufnehmer. 1 betrifft ein Biegeelement, 2 die auf ihm angebrachten Dehnungsmesstreifen. Ein Teil davon könnte auch auf der Unterseite des Balkens angebracht sein. Eine mit Rillen versehene elastische Membran 3, welche mit dem Aufnehmerkörper 5 fest verbunden ist, nimmt den Druck p auf und verbiegt sich dabei nach innen. Diese Deformation wird mittels eines auf der Membran 3 aufgesetzten Kraftübertragungssteges 4 als Kraft auf das Biegeelement 1 übertragen, wodurch sich dieses in derselben Richtung durchbiegt wie die Membran und die auf der Oberseite angebrachten Dehnungsmesstreifen 2a, b gedehnt oder gestaucht werden. Diese Dehnungsmesstreifen sind im allgemeinen als Widerstände in eine Brückenschaltung geschaltet, womit deren infolge der Dehnung oder Stauchung entstehende Widerstandsänderung ermittelt werden kann. Eine logische Verknüpfung der Widerstandsänderungen ergibt ein Mass für den Druck p. Zu beachten ist, dass in der dargestellten Anordnung die inneren Dehnungsmesstreifen 2a gedehnt und die äusseren 2b gestaucht werden, und dass nicht die ganze diametrale Länge des Biegeelementes 1 messtechnisch ausgenützt werden kann, weil zwischen der Zone der inneren Dehnungsmesstreifen 2a und jener der äusseren Dehnungsmesstreifen 2b eine Zone liegt, die nicht gekrümmt wird und auf welcher Dehnungsmesstreifen unwirksam sind, weil das Biegeelement 1 an beiden Enden eingespannt ist.

Die Einspannung des Biegeelementes 1 kann z.B. durch einen Anpressflansch 6 gegen eine Stufe des Aufnehmerkörpers 5 erfolgen oder durch andere Klemmittel. Bei einer Temperaturänderung ▲T - beispielsweise Erwärmung - ändert sich der Durchmesser des rohrförmigen Aufnehmerkörpers 5, was eine Zugkraft Z auf das Biegeelement 1 bewirkt, weil sich der Durchmesser des Aufnehmerkörpers vergrössert. Dadurch werden natürlich die Messresultate verfälscht. Aus Fig. 1 geht somit hervor, dass der gegenwärtige Stand der Technik Nachteile aufweist in Bezug auf Messempfindlichkeit, Temperaturstabilität und Genauigkeit.

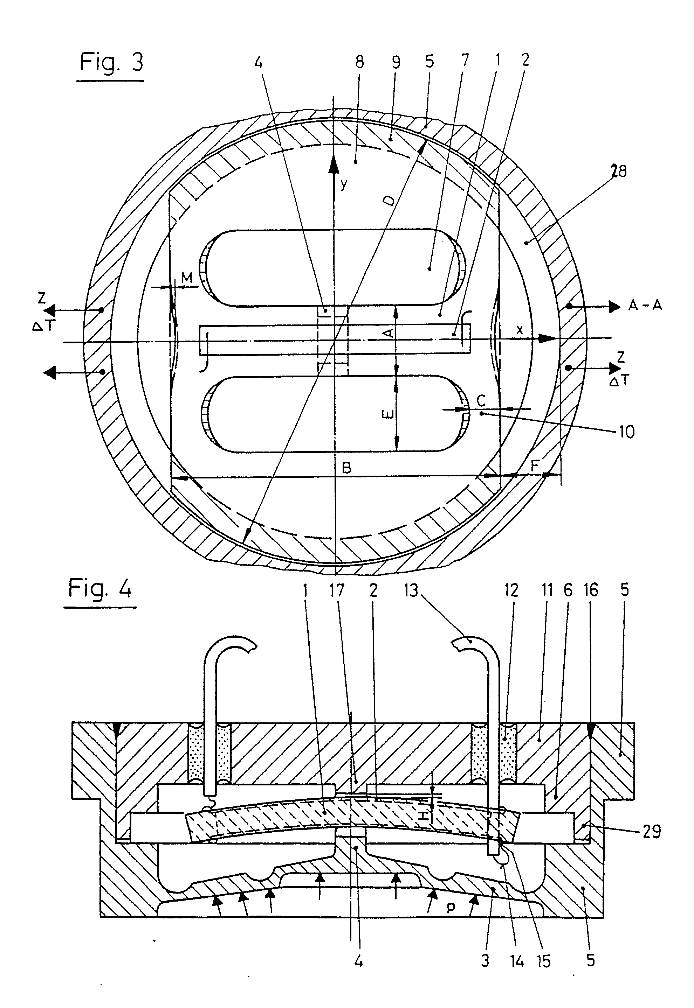

Fig. 2 stellt eine Ausführungsform des erfindungsgemässen Sensorelementes dar. Die schon verwendeten Bezugszeichen haben dieselbe Bedeutung wie in Fig. 1. Der Hauptunterschied gegenüber der konventionellen Ausführungsform von Fig. 1 besteht darin, dass der biegebalkenartige Bereich bzw. die Biegebalkenpartie 1 zum Mittelabschnitt eines scheibenförmigen Sensorelementes wird und beidseitig von schlitzförmigen Aussparungen 7 eingeschlossen ist. Das Sensorelement ist am Biegebalkenbereich nicht eingespannt, also frei. In diesem Abschnitt hat es eine Rechteckform, wie in Fig. 3 (Aufsicht) deutlich ersichtlich ist. Das Sensorelement ist eingespannt längs der kreisringförmigen Einspannflächen 9 senkrecht zur Biegebalkenachse (vergl. Fig. 3), und zwar zwischen einer Stufe des Aufnehmerkörpers 5 und einem Einspannelement 6. Die Biegebalkenenden werden dadurch im wesentlichen frei beweglich. Die Verbindung der Biegenbalkenpartie 1 mit den die Einspannflächen 9 aufweisenden Halterungsbereichen 8 des Sensorelementes erfolgt über vier relativ schmale torsionselastische Verbindungen 10, wobei in der Zeichnung nur zwei sichtbar sind. Aus der Figur geht hervor, dass in dieser Ausführungsform eines Sensorelementes praktisch die gesamte Länge der Biegebalkenpartie mit Dehnungsmesselementen belegt werden kann, die nur in einer Richtung gekrümmt wird, wodurch die Messempfindlichkeit steigt. s kennzeichnet den Weg, welchen der Scheitelpunkt des Biegebalkens aus seiner Nullage bei der Belastung zurückgelegt hat. Um dasselbe Ausgangssignal zu erhalten, muss s bei einer konventionellen Balkenkonstruktion (Fig. 1) erheblich grösser sein als bei einer erfindungsgemässen (Fig. 2), bei der somit die Membran weniger deformiert wird. Durch Variation der eingezeichneten Balkendicke d ist eine Abstimmung des Sensorelementes auf verschiedene Druck-, Kraft- und Beschleunigungsbereiche möglich. Das in Fig. 2 dargestellte Biegebalken-Sensorelement ist in einen Druckaufnehmer mit einer frontseitigen elastischen Membran 3 und einem Krafteinleitungselement 4 eingebaut, welches auf die parallel zur y-Achse liegende (Fig. 3) Mittellinie der Biegebalkenpartie 1 einwirkt, wodurch die Biegebalkenpartie eine durchgehend gleichmässige Krümmung erfährt. Diese wird auf der Ober- und Unterseite der Biegebalkenpartie 1 mit Dehnungsmesselementen 2 erfasst, wobei jene auf der Oberseite gestreckt, jene auf der Unterseite in gleichem Masse gestaucht werden. Durch eine geeignete Schaltung lassen sich dadurch Temperatureinflüsse auf die Balkenpartie 1 eliminieren.

Dass bei der erfindungsgemässen Konstruktion eines Biegebalken-Sensorelementes auch die Temperaturstabilität weit besser ist als bei der in Fig. 1 dargestellten konventionellen Lösung, wird in Fig. 3 dargestellt werden.

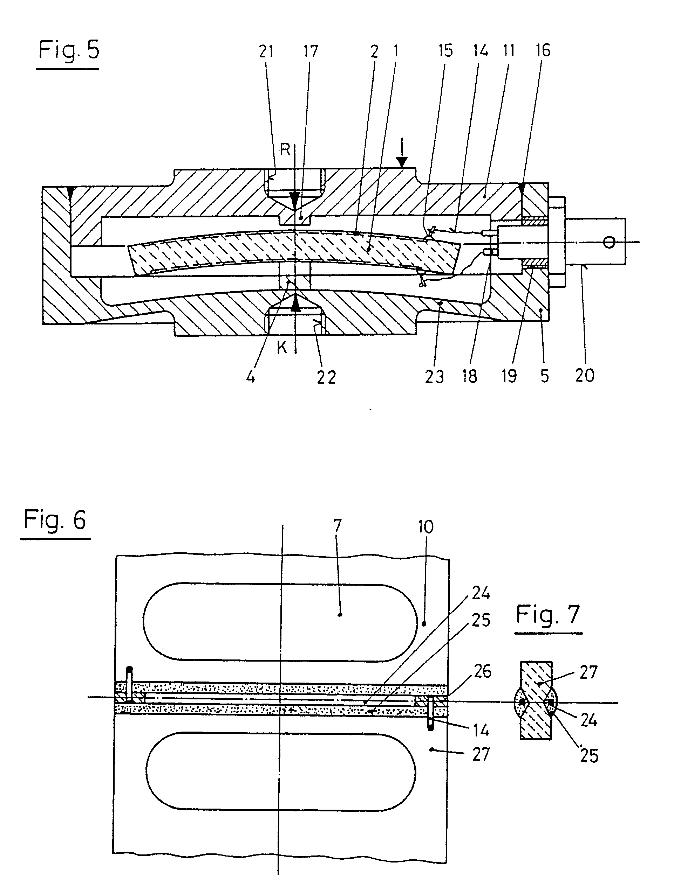

Fig. 3 zeigt einen Querschnitt G-G durch das in Fig. 2 dargestellte Biegebalken-Sensorelement, wo die Form des Sensorelementes und dessen Einspannung deutlich sichtbar werden. Durch das Zentrum des Sensorelementes mit dem Durchmesser D ist ein kartesisches Koordinatensystem mit den Achsen x und y gelegt, wobei die x-Achse die Hauptachse des als Biegebalken wirksamen und teilweise mit Dehnungsmesselementen 2 versehenen Mittelabschnittes von der Breite A bildet und senkrecht zu den Kanten des rechteckigen Teiles der Scheibe von der Breite B steht. Senkrecht dazu, d.h. in der y- Achse, steht das durch den Mittelabschnitt der Scheibe verdeckte Kraftübertragungselement 4. Beidseitig neben dem Mittelabschnitt befinden sich schlitzförmige Aussparungen 7 von der Breite E, welche seitlich durch runde Partien begrenzt werden. Dadurch werden in dieser Ausführungsform der Erfindung vier Verbindungen 10 von der Breite C gebildet, welche den Mittelabschnitt und damit die Biegebalkenpartie 1 mit den das Sensorelement in der y-Richtung begrenzenden und über den Bereich der ringförmigen Einspannfläche 3 fest eingespannten Halterungssegmenten 8 verbinden. Wenn von der in der Figur nicht sichtbaren Membran her eine Druckkraft auf das Kraftübertragungselement 4 ausgeübt wird, so biegt sich die Biegebalkenpartie 1 nach oben durch, wie bereits in Fig. 2 dargestellt wurde, und an den seitlich davon liegenden Rechteck-Kanten entstehen als Folge davon Einbuchtungen von einer Tiefe M. Der in der Scheibe 8 und speziell im Biegebalken 1 entstehende Spannungszustand erreicht infolge der relativen Bewegungsfreiheit der nicht eingespannten Balkenenden bei Krafteinleitung eine gleichmässige Durchbiegung. Dies wäre nicht der Fall, wenn das Sensorelement kreisförmig und längs seines ganzen Umfanges eingespannt wäre, wie es dem bereits in Fig. 1 dargestellten Stand der Technik entsprechen würde. Die gleichmässige Durchbiegung der Biegebalkenpartie 1 hat zur Folge, dass die auf der Ober- und Unterseite der genannten Partie angebrachten Dehnungsmesselemente 2 auf der ganzen Balkenlänge gleichmässig durchgebogen werden und dadurch bei gleicher eingeleiteter Kraft ein viel grösseres Messignal abgeben (und dies bei geringerer Deformation der Membran) als bei der konventionellen Konstruktion nach Fig. 1, bei der im Balken bei dessen Durchbiegung spannungsfreie Zonen erhalten bleiben, die kein Messignal abgeben können. Zudem kann der Biegebalken bei freien Enden fast auf seiner ganzen Länge mit Dehnungsmesselementen belegt werden. Aus diesen Gründen ist die Messempfindlichkeit des erfindungsgemässen Sensorelementes über weite Bereiche weit höher als bei einem konventionellen Sensorelement. Fig. 3 stellt auch den Einfluss einer Temperaturveränderung auf das Sensorelement dar. Wie bei der in Fig. 1 dargestellten konventionellen Konstruktion dehnt eine Temperaturerhöhung $\Delta T$ den rohrförmigen Aufnehmerkörper 5 sowie den Flansch 6 aus, wodurch radiale Zugspannungen Z entstehen. Diese können sich jedoch, im Gegensatz zu der konventionellen Konstruktion (Fig. 1), auf die Biegebalkenpartie 1 nicht direkt auswirken, da diese mit den sich ausdehnenden rohrförmigen Körpern 5,6 nur über die schmalen und senkrecht zu der Balkenachse (x-Achse) stehenden Torsionsgelenke 10 verbunden sind und die Dehnungsmesselemente im wesentlichen nur für Kraftwirkungen in der Balkenachse (x-Richtung) empfindlich sind. Auch Deformationen des Aufnehmerkörpers 5 infolge anderer störender Krafteinwirkungen von aussen, z.B. durch Einbau des Aufnehmers bedingt, können sich aus den gleichen Gründen im wesentlichen nicht auf die von den Dehnungsmesselementen abgegebenen Messignale auswirken. Durch Optimierung der in der Fig. 3 dargestellten und bereits definierten Parameter A,B,C,D,E,F und geeignete Materialwahl für den Grundkörper des Sensorelementes, die Dehnungsmesselemente 2 und die Rohrkörper 5,6 lässt sich eine maximale Messempfindlichkeit bei minimaler Störanfälligkeit erreichen. Das Sensorelement kann beispielsweise aus einer Silizium-Scheibe oder anderem Kristallmaterial mit eindiffundierten Dehnungsmesselementen bestehen, oder aus einer Saphirscheibe mit Dehnungsmesselementen, die mittels der SOS-Technik aufgebracht werden. Es kann aber auch aus einer Keramikscheibe bestehen, auf welcher Dehnungsmesstäbe aus Silizium aufgeglast sind. Diese Methode wird in der Fig. 6 näher dargestellt werden. Mit solchen Ausführungsformen können Aufnehmer hergestellt werden, welche bis zu hohen Temperaturen verwendbar sind. Für Betriebsverhältnisse, die keine besonderen Anforderungen stellen, können Grundkörper aus Metallegierungen mit handelsüblichen aufklebbaren Dehnungsmessstreifen verwendet werden. Auch Metallegierungen mit Dünnschicht-Dehnungsmesselementen sind möglich. Das Sensorelement kann auch aus piezoelektrischem Material bestehen. Aus der Fig. 3 lässt sich auch erkennen, dass das Sensorelement auf einfachste Weise verschoben und gedreht und dadurch in einer bestimmten Position durch Festklemmen zwischen den rohrförmigen Aufnehmerkörpern 5,6 gefasst werden kann. Dadurch lässt sich die Biegebalkenpartie 1 mit dem Koordinatensystem x,y drehen und geringfügig verschieben, wodurch diese sowohl mit dem Kraftübertragungselement 4 wie mit dem Ueberlastschutzelement 17 (erst in Fig. 4 dargestellt) positionsmässig in Uebereinstimmung gebracht werden kann. Die Fassung des Sensorelementes durch Einklemmen zwischen den rohrförmigen Aufnehmerkörpern ist reibungsfrei und erzeugt keine Hysterese in den Messkurven.

Fig. 4 stellt einen mit dem erfindungsgemässen Sensorelement ausgestatteten Einbau-Druckkaufnehmer dar.

Das Sensorelement, von dem hier nur die Biegebalkenpartie 1 mit den auf deren Ober- und Unterseite angebrachten Dehnungsmessele menten 2 sichtbar ist, wurde bereits eingehend beschrieben. Der Druck p wird durch eine elastische Membran 3 mit zwei kreisförmigen Kerben aufgenommen und durch ein Kraftübertragungselement 4 auf die Biegebalkenpartie 1 übertragen. Das Kraftübertragungselement 4 steht über eine abgerundete Kuppe mit der Biegebalkenpartie 1 in Kontakt. Durch die Abrundung der Kuppe wird eine Minimalisierung der Reibung zwischen Kraftübertragungselement 4 und Biegebalkenpartie 1 erreicht. Ueberdies findet die Kraftübertragung im wesentlichen über eine Kontaktlinie statt, wodurch eine genaue Definition der Biegungsscheitellinie erreicht werden kann. Die Symmetrie der Balkenteile auf beiden Seiten dieser Scheitellinie ist wichtig für die Messgenauigkeit. Eine Abdeckplatte 11 geht sensorseitig in einen Flansch 6 über, welcher gemeinsam mit dem Aufnehmerkörper 5 das Sensorelement festklemmt (die Klemmpartie ist in dieser Schnittdarstellung nicht sichtbar). Die Verbindung zwischen Aufnehmerkörper 5 und Abdeckplatte 11 erfolgt beispielsweise durch eine Schweissnaht 16. In der Abdeckplatte 11 sind Bohrungen mit elektrisch isolierenden Glasdurchführungen 12 für die Signalableitungsstifte 13 angebracht. Die Signalableitungsstifte 13 sind mit Drähten 14 verbunden und kontaktieren über Kontakttropfen 15 die Dehnungsmesselemente 2, wodurch eine Signalauswertung in Voll- oder Halbbrückenbauweise möglich wird. Die Abdeckplatte 11 trägt in ihrer Mitte ein stegförmiges Ueberlastschutzelement 17, welches dem Kraftübertragungselement 4 genau gegenüber liegt. Die Höhendifferenz H zwischen der Scheitellinie eines normal belasteten Biegebalkens 1 und der Begrenzungsfläche des Ueberlastschutzes 17 muss so eingestellt werden, dass das Sensorelement bei der maximal möglichen Belastung nicht zerbricht. Die erfindungsgemasse Ausführungsform des in Fig. 4 dargestellten Druckaufnehmers wird dadurch gekennzeichnet, dass das Biegebalken-Sensorelement in einer Abdeckplatte 11 mittels Zentrierbund 29 gehaltert ist, wobei die Abdeckplatte 11 Glasdurchführungen 12 mit Signalableitungen 13 enthält und durch Anschluss an die Drähte 14 der Biegebalkenpartie 1 gemeinsam mit dem Biegebalken-Sensorelement eine vormontierbare Einheit bildet. Diese kann während des Montageverfahrens in den Aufnehmerkörper 5 eingepresst und verschweisst werden.

Fig. 5 zeigt einen Schnitt durch einen das erfindungsgemässe Sensorelement enthaltenden Kraftaufnehmer. Die Bauweise ist prinzipiell dieselbe wie jene für den in Fig. 4 dargestellten Druckaufnehmer. Die Membran von Fig. 4 ist jetzt als Krafteinleitungsplatte 23 ausgebildet, welche in der Zentralachse des Aufnehmers z.B. ein Aufnahmegewinde 22 für eine (nicht dargestellte) Krafteinleitungsschraube enthalten kann. Die Randzone der Krafteinleitungsplatte 23 ist relativ dünn und dadurch elastisch. Die Abdeckplatte 11 ist starr ausgebildet. Auch sie kann ein Aufnahmegewinde 21 für eine krafteinleitende Schraube aufweisen. Die Abdeckplatte ist bis zum Rande hinreichend dick und robust gestaltet, um eine Reaktionskraft R aufzunehmen, welche als Folge einer auf die Krafteinleitungsplatte 23 ausgeübten Druckkraft K auftritt. Analog Fig. 4 wird dabei die Biegebalkenpartie 1 in die Richtung des Ueberlastschutzelementes 17 durchgebogen. Die Signalableitung kann seitlich erfolgen, und zwar durch Drähte 13, welche einerseits über Kontakttropfen 15 mit den Dehnungsmesselementen 2 verbunden sind, anderseits über Steckeranschlussstifte 18 mit dem Anschlussstecker 20, welcher mittels einer Gewindebuchse 19 in eine Gewindebohrung des Aufnehmerkörpers 5 eingeschraubt ist. Fig. 5 stellt einen Kraftaufnehmer dar, der beispielsweise zur Kraftmessung zwischen zwei Maschinenteilen verwendet werden kann (Force Link). In vielen Fällen muss er möglichst flach sein.

Eine Weiterführung der dargestellten Ausführungsform der Erfindung besteht darin, dass die Biegebalkenpartie 1 "vorgespannt" wird, d.h. eine Anfangskrümmung gegen das Ueberlastschutzelement 17 erhält. Dann können nicht nur Druck-, sondern auch Zugkräfte gemessen werden.

Fig. 6 zeigt eine bereits bei Fig. 3 erwähnte Ausführungsform und Herstellungsart des Biegebalkens. Dargestellt ist, in Aufsicht, ein Ausschnitt aus einem erfindungsgemässen Biegebalken-Sensorelement. Das Grundmaterial ist eine Keramik. Die Dehnungsmesselemente bestehen aus vorzugsweise monokristallinen Silizium-Stäbchen, die "aufgeglast" werden, was bedeutet, dass sie während des Herstellungsverfahrens von einem Streifen flüssigen Glases eingeschlossen werden, der in eine Kerbe des Keramik-Grundkörpers eingegossen wird. Die derart entstehende Verbindung zwischen Silizium-Stäbchen, Glasstreifen und Keramik-Grundkörper ist sehr stabil und hitzebeständig. Die auf solche Weise hergestellte Ausführungsform des Sensorelementes ist in den Figuren 6 (Aufsicht) und 7 (Querschnitt) gezeigt. Die Bezugszeichen 24 bedeuten das eingeglaste Si-Stäbchen, 25 die sich seitlich ausdehnende Einglasungszone. An den Enden der Si-Stäbchen 24 befinden sich metallisierte Kontaktflächen 26, welche mit Anschlussdrähten 14 verbunden sind. Je nach den schaltungstechnischen Erfordernissen führen diese Drähte die Messignale beispielsweise über stiftförmige Signalableitungen (Fig. 4) oder Steckeranschlüsse (Fig. 5) nach aussen, oder sie stellen interne Verbindungen her. Im allgemeinen befinden sich solche Dehnungsmesselemente sowohl auf der Ober- wie auf der Unterseite des Keramik-Grundkörpers 27, wie aus Fig. 7 ersichtlich ist.

Mit derartigen Biegebalken-Anordnungen lassen sich Sensorelemente herstellen, die bis zu sehr hohen Temperaturen eingesetzt werden können.

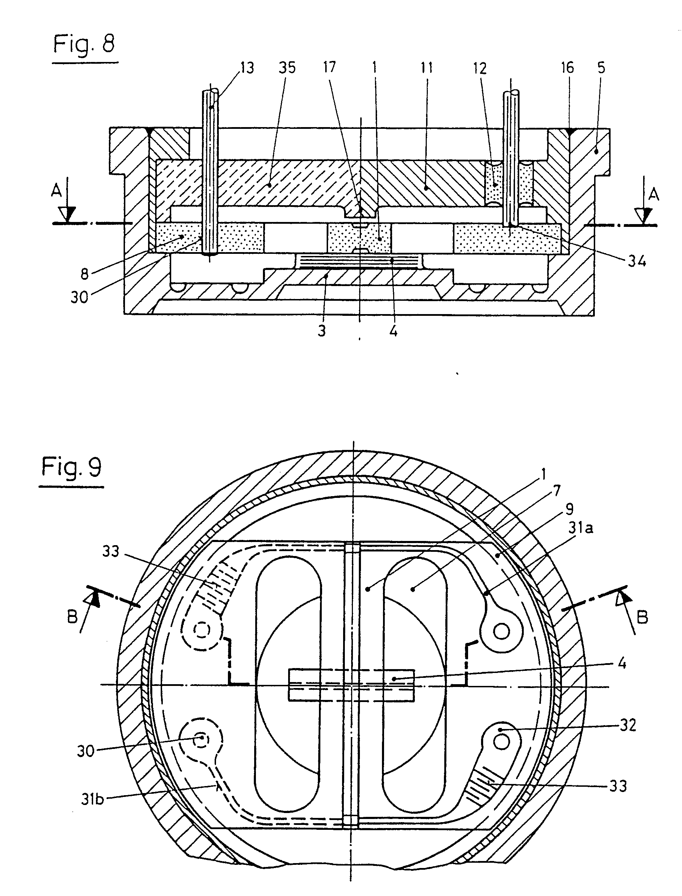

In den Fig. 8, 9 und 10 werden weitere Verbesserungen der elektrischen Anschlüsse an das erfindungsgemässe Sensorelement gezeigt. Dabei werden die Anschlüsse an die Dehnungsmesselemente über aufgedruckte oder aufgedampfte Leiterpfade 31a, b an die Signalübertragungsstellen gebracht. Es ist auch möglich, in diese Leiterpfade abgleichbare Kompensationswiderstände 33 einzuschliessen. Durch Verlegung der Signalübertragungsstellen in die segmentförmigen Halterungsbereiche 8 wird eine Solidstate-ähnliche Übertragungssicherheit erreicht, was bei schwingenden Anwendungen von Bedeutung ist.

Gemäss Fig. 8 werden für die internen Leiterpfade die Signalableitungsstifte 13 durch Kontaktbohrungen 30 im plattenförmigen Sensorelement mit unteren Anschlussaugen 32 verbunden. Für die oberen Leitpfade 31a wird der Signalableitstift 13 in eine Anbohrung 34 gesteckt und mit dem Anschlussauge 32 verbunden. Die Signalableitungsstifte sind in einem Keramikeinsatz 35 oder in einer metallischen Abdeckplatte 11 mit Glasdurchführungen 12 gehalten. In Fig. 9 ist die erfindungsgemässe Sensorplatte in Aufsicht gezeigt mit den oberen und unteren Leiterpfaden 31b, den Kompensationswiderständen 33 und den Anschlussaugen 32. Es ist aber auch möglich, die Kompensationswiderstände oberhalb der Abdeckplatte 11 oder des Keramikeinsatzes 35 anzuordnen.

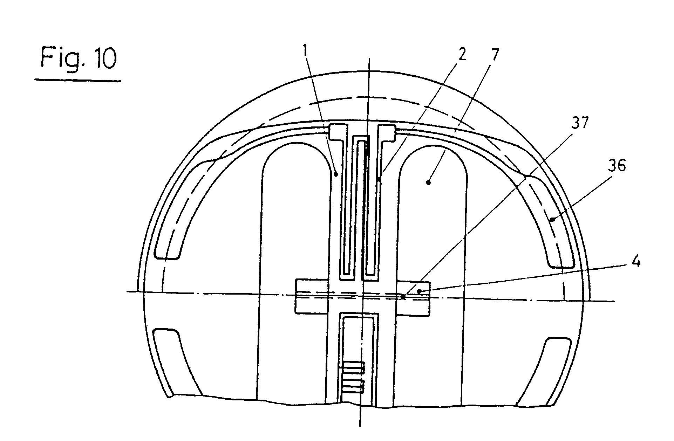

Fig. 10 zeigt eine Aufsicht des erfindungsgemässen plattenförmigen Sensorelementes, bei dem die Signale mittels Presskontaktflächen 36 auf den Keramikeinsatz 35 übertragen werden, von wo sie mittels Signalableitungsstiften 13 (Fig. 8) nach aussen abgeführt werden. Durch das Einklemmen des Sensorelementes kann gleichzeitig auch die Signalübertragung durchgeführt werden.

In gewissen Anwendungen ist eine möglichst lange Biegebalkenpartie gewünscht. Fig. 10 zeigt eine solche Optimierungsmöglichkeit, wobei die ringförmige Einspannfläche 9 etwa gleich gross geblieben ist. Anstelle einer geradlinigen Abgrenzung ist eine gekrümmte Abgrenzung der Enden der Biegebalkenpartie vorgesehen. Es sind aber auch andere Abgrenzungsformen möglich, z.B.

pfeilförmige Konfigurationen. Wie diese Abgrenzungsflächen auch gestaltet sind, immer wird die Biegebalkenpartie durch vier torsionselastische Verbindungen an ihren Enden gehaltert, welche an die beiden Halterungsbereiche 8 angeschlossen sind.

Mit der vorliegenden Erfindung ist es gelungen, ein Sensorelement auf Biegebalken-Basis für Drükke, Kräfte und -durch Anbringung einer seismischen Masse - Beschleunigungen zu schaffen, welche sich durch eine hohe Temperaturbeständigkeit und hohe Messempfindlichkeit auszeichnet. Die Messung störende äussere Einflüsse, wie Temperaturschwankungen, unerwünschte Krafteinwirkungen etc., werden weitgehend eliminiert. Das Sensorelement kann auf einfache Weise sowohl in Druckaufnehmer als auch in Kraft- und Beschleunigungsaufnehmer montiert werden. Durch seine Flachscheibenform und die Halterungsart kann es auf einfache Weise in präziser Auflageposition eingebaut werden.

**Ansprüche**

1. Plattenförmiges Sensorelement, insbesondere für den Einbau in Druck-, Kraft- oder Beschleunigungsaufnehmer, welches ein für die Durchbiegung unter dem Einfluss einer Biegekraft massgebliches elektrisches Signal liefert, dadurch gekennzeichnet, dass das Sensorelement eine im wesentlichen rechteckförmige Konfiguration mit einem Paar gegenüberliegenden Halterungsbereichen (8) zur Befestigung in einem Aufnehmer hat, und dass ein zentraler biegebalkenartiger Bereich (1) zwischen den freien Stirnenden ausgebildet und torsionselastisch mit den Halterungsbereichen (8) verbunden ist.

2. Sensorelement nach Anspruch 1, dadurch gekennzeichnet, dass beidseitig des biegebalkenartigen Bereiches (1) torsionselastische Verbindungen schaffende, vorzugsweise endseitig abgerundete Schlitze (7) vorgesehen sind.

3. Sensorelement nach Anspruch 1 oder 2, dadurch gekennzeichnet, dass die Halterungsbereiche (8) kreissegmentförmige Einspannflächen (9) aufweisen.

4. Sensorelement nach Anspruch 1, 2 und 3, dadurch gekennzeichnet, dass der biegebalkenartige Bereich (1) eine optimale Länge erreicht und an seinen beiden Enden durch im wesentlichen rechtwinklig angeordnete Torsionsgelenke in die beiden Halterungsbereiche (8) übergeht.

5. Sensorelement nach einem der vorhergehenden Ansprüche, dadurch gekennzeichnet, dass es aus einer Metallegierung besteht, und dass der biegebalkenartige Bereich (1) an wenigstens einer seiner Oberflächen mit Dehnungsmesselementen versehen ist.

6. Sensorelement nach einem der Ansprüche 1 bis 4, dadurch gekennzeichnet, dass es aus einem keramischen Material besteht, und dass an wenigstens einer Oberfläche des biegebalkenartigen Bereiches (1) Dehnungsmesselemente aus eingeglasten Siliziumstäbchen (24) vorgesehen sind.

7. Sensorelement nach einem der Ansprüche 1 bis 4, dadurch gekennzeichnet, dass es aus einem Kristallmaterial besteht, und dass der biegebalkenartige Bereich (1) an wenigstens einer seiner Oberflächen eindiffunierte Leiterpfade ausweist.

8. Sensorelement nach einem der Ansprüche 1 bis 4, dadurch gekennzeichnet, dass es aus einem Saphirmaterial besteht, und dass der biegebalkenartige Bereich (1) an wenigstens einer seiner Oberflächen nach der SOS-Technik gebildete Leitpfade aufweist.

9. Sensorelement nach einem der Ansprüche 1 bis 4, dadurch gekennzeichnet, dass es aus einem piezoelektrischen Material besteht.

10. Sensorelement nach einem der vorhergehenden Ansprüche, dadurch gekennzeichnet, dass die Dicke wenigstens des biegebalkenartigen Bereiches (1) entsprechend einem gewünschten Druck-, Kraft- oder Beschleunigungsmessbereich abgestimmt ist.

11. Druck-, Kraft- oder Beschleunigungsaufnehmer, gekennzeichnet durch ein darin befestigtes Sensorelement nach einem der vorhergehenden Ansprüche, wobei ein Krafteinleitungselement (4) vorgesehen ist, welches auf eine zentrale Stelle des biegebalkenartigen Bereiches (1) zur Schaffung einer im wesentlichen durchgehenden gleichmässigen Krümmung wirkt.

12. Aufnehmer nach Anspruch 11, dadurch gekennzeichnet, dass das Sensorlement zwischen einem das Kraftübertragungselement (4) aufweisenden Grundkörper (5) und einem Einspannelement (6) vorzugsweise unter Vorspannung gehalten ist.

13. Aufnehmer nach Anspruch 12, dadurch gekennzeichnet, dass der Grundkörper (5) eine im wesentlichen ringförmige Konfiguration hat, und dass das Sensorelement durch Drehung relativ zum Grundkörper in Bezug auf das Kraftübertragungselement (4) positioniert ist.

14. Aufnehmer nach einem der Ansprüche 11 bis 13, gekennzeichnet durch eine das Sensorlement enthaltende Abdeckplatte (11) mit Zentrierbund (29) und Durchführungen (12) für mit den Anschlusskontakten des biegebalkenartigen Bereiches (1) des Sensorlementes verbundenen Signalableitungselementen (13), wobei die Anordnung aus Abdeckplatte und Sensorlement eine vormontierte durch Einpressen und Verschweissen mit dem Grundkörper verbundene Einheit ist.

15. Sensorelement nach Ansprüchen 1 bis 10, dadurch gekennzeichnet, dass die elektrischen Anschlusspartien in den Halterungselementen (8) vorgesehen sind und über auf dem plattenförmigen Sensorelement aufgebrachte Leiterpfade mit den Dehnungsmesselementen (2a,b) des biegebalkenartigen Bereiches (1) in Verbindung stehen.

16. Sensorelement nach Ansprüchen 1 bis 10, dadurch gekennzeichnet, dass das plattenförmige Sensorelement in den Halterungsbereichen (8) mit metallisierten Kontaktbohrungen (30) versehen ist, durch welche Signalableitungsstifte (13) durchgeführt und mit den Leiterpfaden (31a,b) verbunden werden.

17. Sensorelement nach Ansprüchen 1 bis 10, dadurch gekennzeichnet, dass das plattenförmige Sensorelement an den Halterungsbereichen (8) mit elektrisch leitenden Presskontaktflächen (36) versehen ist, auf welche entsprechende Gegenflächen in der Deckplatte passen, so dass mit der Einspannklemmung des plattenförmigen Sensorelementes gleichzeitig auch die Presskontaktflächen (36) unter Kontaktdruck gesetzt werden und eine Signalableitung an die Abdeckplatte (11) erreicht wird.

18. Druck-, Kraft- oder Beschleunigungsaufnehmer, dadurch gekennzeichnet, dass er ein Sensorelement nach einem der Ansprüche 1 bis 10 enthält, dass das Sensorelement zwischen einer Abdeckplatte (11) und dem Aufnehmerkörper (5) eingeklemmt ist, und dass die Abdeckplatte (11) ein Überlastschutzelement (17) trägt und mit dem Aufnehmergehäuse vakuumverschweisst ist.

19. Druck-, Kraft- oder Beschleunigungsaufnehmer, dadurch gekennzeichnet, dass er ein Sensorelement nach einem der Ansprüche 1 bis 10 enthält, wobei der biegebalkenartige Bereich (1) durch eine geradlinige Auflagekante (37) des Kraftübertragungselementes (4) gebogen wird.

20. Kraftaufnehmer, dadurch gekennzeichnet, dass er ein Sensorelement nach einem der Ansprüche 1 bis 10 enthält, dessen biegebalkenartiger Bereich (1) im unbelasteten Zustand bereits eine Verbiegung aufweist zwecks Messung von Zug- und Druckkräften.

Fig. 1    Stand der Technik

Fig. 2

Fig. 3

Fig. 4

Fig. 5

Fig. 6

Fig. 7

EP 0 383 974 A1

Fig. 8

Fig. 9

Fig. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 004 031 (PHILIPS PATENTVERWALTUNG GMBH) * Ansprüche 1,2,4 * --- | 1,5 | G 01 L 9/00 G 01 L 9/04 G 01 L 9/06 G 01 L 1/22 G 01 L 1/18 G 01 P 15/12 |
| Y | DE-B-1 648 745 (TOYODA MACHINE WORKS LTD.) * Anspruch 1 * --- | 1 | |
| Y | DE-A-3 310 538 (SIEMENS AG) * Anspruch 1 * --- | 1 | |
| A,D | GB-A- 953 138 (PHILIPS ELECTRICAL INDUSTRIES LTD.) --- | 1 | |
| A,D | US-A-4 064 744 (W. P. KISTLER) --- | 1 | |
| A,D | US-A-3 241 373 (L. W. RICKETTS et al.) --- | 1 | |
| A,D | DE-C-1 252 439 (DEUTSCHE FORSCHUNGSANSTALT FUER LUFT- UND RAUMFAHRT) --- | 1,10 | |
| A,D | EP-A-0 134 394 (VDO ADOLF SCHINDLING AG) --- | 1,10 | **RECHERCHIERTE SACHGEBIETE (Int. Cl.5)** G 01 L G 01 B G 01 P |
| A | DE-A-1 648 461 (ETHER ENGINEERING LTD.) * Anspruch 1 * --- | 1 | |
| A | DE-B-2 347 545 (A. SAUTER GMBH) * Anspruch 1 * --- | 1 | |
| A | DE-B-1 573 613 (KABUSHIKI KAISHA TOYOTA CHUO KENKYUSHO) * Anspruch 1 * --- -/- | 1 | |

Der vorliegende Recherchenbericht wurde für alle Patentansprüche erstellt

| Recherchenort | Abschlußdatum der Recherche | Prüfer |
|---|---|---|
| BERLIN | 31-08-1989 | KOEHN G |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 608 381  (HOTTINGER BALDWIN MESSTECHNIK GMBH) * Ansprüche 1,4,5 * | 1,2 | |
| A | EP-A-0 214 468  (R. BOSCH GMBH) * Ansprüche 1-3,5 * | 1,5 | |
| A | ELEKTRONIK Band 35, Nr. 14, 11. Juli 1986, Seiten 79,80, München, DE; G. A. WEISSLER: "Sensoren unter Druck" * Seite 80 * | 1,5 | |
| A | DE-C-1 214 435  (SIEMENS AG) * Anspruch 1 * | 1,6 | |

**RECHERCHIERTE SACHGEBIETE (Int. Cl.5)**

Der vorliegende Recherchenbericht wurde für alle Patentansprüche erstellt

| Recherchenort | Abschlußdatum der Recherche | Prüfer |
|---|---|---|
| BERLIN | 31-08-1989 | KOEHN G |

EPO FORM 1503 03.82 (P0403)